# EUROPEAN PATENT SPECIFICATION

(11) **EP 2 404 082 B1**
(45) Date of publication and mention of the grant of the patent: **26.03.2014**
(21) Application number: 10749008.8
(22) Date of filing: 10.02.2010
(51) Int. Cl.: F16H 48/30, B60K 23/04, F16H 48/24, F16H 48/08, F16H 48/34

(54) **MOTOR VEHICLE WITH DIFFERENTIAL LOCK**
KRAFTFAHRZEUG MIT DIFFERENZIALSPERRE
VÉHICULE À MOTEUR COMPORTANT UN VERROUILLAGE DU DIFFÉRENTIEL

(30) Priority: 02.03.2009 SE 0950107
(43) Date of publication of application: 11.01.2012
(73) Proprietor: Scania CV AB, 151 87 Södertälje (SE)
(72) Inventor: KARLSSON, Stefan, S-144 52 Rönninge (SE); INGESSON, Mattias, S-118 57 Stockholm (SE)
(74) Representative: Sjögren Paulsson, Stina
(86) International application number: PCT/SE2010/050154
(87) International publication number: WO 2010/101509

(56) References cited:
- EP-A1- 1 367 298
- EP-B1- 0 598 234
- WO-A1-2007/108022
- DE-A1- 4 038 731
- DE-A1- 10 306 994
- DE-B3-102004 054 716
- JP-A- 10 318 352
- JP-A- 2000 202 725
- JP-A- 2001 336 606
- US-A- 3 146 842

## Description

### TECHNICAL FIELD

The present invention relates to an assembly process for fitting of operating means for acting upon a differential lock of a motor vehicle.

The invention relates also to a computer programme product comprising programme code for a computer to control a robot which is adapted to fitting of operating means for acting upon a differential lock of a motor vehicle.

### BACKGROUND

Vehicles today may be equipped with central gears for a rear axle of the vehicle and with a differential. The differential is adapted to distributing driving force to powered rear wheels so that they can rotate at different speeds. This is particularly desirable when the vehicle negotiates carriageway bends. It is also desirable for vehicles equipped with a differential to have a so-called differential lock. The differential lock is adapted to causing two powered rear wheels to rotate at the same speed in cases where this is desirable. It may for example be desirable to have the differential lock in an active state in driving situations where the running surface is slippery or the vehicle becomes stuck in the running surface or the powered wheels have different friction coefficients relative to the running surface. Vehicles which have a differential lock are also equipped with a control for activating and deactivating the differential lock.

Today's practice in the setting of operating means for acting upon a differential lock for a rear axle gear in an engine-powered vehicle involves the use of spacing washers to achieve correct clearance in an associated differential lock coupling. A differential lock coupling usually comprises a differential housing half and a coupling half mounted on splines which are, for example, disposed on a driveshaft. Mutual engagement of teeth of the differential housing half and corresponding teeth of the coupling half effects a differential lock function whereby rear driveshafts of the vehicle will rotate at substantially the same speed. It is desirable that the teeth of the differential coupling should not bottom fully upon engagement, as this would result in a build-up of excessive bending stresses which might cause damage. The differential coupling bottoms when an upper plane of the teeth of the coupling half comes into contact with a lower plane of the teeth of the differential housing half.

Disadvantages arising from use of spacing washers when fitting and setting the operating means for acting upon the differential lock are related to production engineering factors which adversely affect vehicle quality.

Fitting the operating means for acting upon the differential lock currently involves manual measurement of a clearance in the differential coupling by a fitter using, for example, a feeler gauge. The fitter decides whether the clearance in the differential coupling is acceptable or not, which involves subjective assessment and may lead to variation between the decisions taken by different fitters.

In cases where the measured clearance in the differential coupling is not within the range of tolerance, the operating means for acting upon the differential lock have to be dismantled so that the fitter can change to a different spacing washer. Thereafter the operating means have to be refitted to the vehicle so that a fresh measurement of the clearance in the differential coupling can be done. This is of course a time-consuming procedure entailing extra costs to the vehicle manufacturer. The rate of production of new vehicles may also be adversely affected in cases where the fitter has to do repeated measurements of the clearance in the differential coupling. This may entail stress upon the fitter.

EP 0 598 234 B1 refers to a locking mechanism for a driveshaft differential and describes operating means for acting upon a differential lock which has a spring in contact with a fork attached to a pin for acting upon a differential coupling. There is however a need to provide improved operating means which are easier for a fitter or a robot to fit to a vehicle. This document discloses:
a method for fitting of operating means for acting upon a differential lock of a motor vehicle, comprising the steps of:
   fitting a configuration which has a first end and a second end so that the first end is supported for sliding in a cylinder and the second end is supported for sliding in the gear housing, whereby the configuration is movable between a first extreme position and a second extreme position, and so that a switching device is fastened to the configuration between the first and second ends, which switching device is adapted to acting upon a coupling half in a differential coupling of the differential lock, so that the differential lock is deactivated when the configuration is in the first extreme position and is activated when the configuration is in the second extreme position,
   setting a position of the configuration relative to the gear housing so that a predetermined clearance in the differential coupling is effected when the configuration is in the second extreme position and
   fitting the cylinder, with the configuration capable of sliding therein, in the gear housing.

### SUMMARY OF THE INVENTION

The invention is defined in claim 1. Preferred embodiments thereof are defined in the dependent claims.

The invention can allow greater tolerances around the operating means for acting upon the differential lock than in the state of the art. The setting of the clearance in the differential coupling arises from an undesirable state of the differential coupling being first reached and the clearance of the differential coupling being set in response thereto. This means that tolerances for vehicle components such as gear housing, bevel gears, differential housing, coupling half and fork are absorbed (zeroed) in the setting process, since the adjustment first leads to opposite teeth of the differential coupling reaching one another and the operating means thereby becoming insensitive to the relative positions of the respective components.

The operating means according to the invention make it possible to achieve in a quality-assured manner a desired clearance for the differential coupling when fitting the latter to the motor vehicle.

The operating means for acting upon a differential lock of a motor vehicle may comprise a spring means disposed about a configuration between a switching device and a surface of the gear housing where a second end of the configuration is supported. The spring is adapted to exerting a pushing force for urging the configuration towards a first extreme position.

The operating means for acting upon the differential lock of the motor vehicle may comprise compressed air means adapted to supplying compressed air via a duct in the cylinder in order to urge the configuration towards a second extreme position.

The configuration indicated in claim 1 may comprise a piston and a pin such that the piston is accommodated in the cylinder and the setting means comprise cooperating threads of the piston and the pin. It is an advantage that the piston is in the cylinder which is in the gear housing, since the extreme position of the piston will thereby be known. It is an advantage that the piston is accommodated in the cylinder in the gear housing during the setting of the clearance in the differential coupling, since this eliminates the risk of oblique settings possibly causing undesirable play which might result in an undesirable clearance in the differential coupling.

The operating means for acting upon a differential lock of a motor vehicle may comprise a locking mechanism for locking the configuration in a set position relative to the gear housing so that a predetermined clearance in the differential coupling is effected when the configuration is in the second extreme position.

The locking mechanism may comprise a cylindrical pin having a length which is greater than a diameter of the end of the pin, which cylindrical pin is adapted to preventing relative rotation between the piston and the pin.

The operating means may comprise a cover adapted to covering the configuration.

The locking mechanism may comprise a piece of sheet metal fastened between the pin and the piston by one or more screws and adapted to preventing relative rotation between the piston and the pin.

The locking mechanism may comprise a key placed in engagement with the cylinder and the pin. The key may effect locking of the piston relative to the pin. The locking mechanism may also comprise a protrusion of a cover for the operating means. The pin may be provided with a recess to accommodate the protrusion, making it possible to effect a locking action between the pin and the cover and hence also with the gear housing.

The configuration may comprise a pushrod, one end of which is accommodated in the cylinder, in which case the setting means comprise cooperating threads of the cylinder and the gear housing.

According to a preferred embodiment, compressed air may be connected to the operating means during a setting process. This makes it possible to achieve a more time-efficient setting process, since the compressed air need not be disconnected before the setting of the operating means is performed.

Further objects, advantages and novel features of the present invention will become apparent to one skilled in the art from the following details, and also by practical application of the invention. Whereas the invention is described below, it should be noted that it is not limited to the specific details described. Specialists having access to the teachings herein will recognise further applications, modifications and incorporations within other fields, which are within the scope of the invention as defined in the claims.

### CONCISE DESCRIPTION OF THE DRAWINGS

Fuller understanding of the present invention and further objects and advantages thereof may be gained by reading the detailed description set out below together with the accompanying drawings, in which the same reference notations denote similar items in the various drawings, and in which:
Figure 1 illustrates schematically a vehicle according to an embodiment of the invention;
Figure 2 illustrates schematically a subsystem for the vehicle depicted in Figure 1, according to an embodiment of the invention;
Figure 3 illustrates schematically a subsystem for the vehicle depicted in Figure 1, according to an embodiment of the invention;
Figure 4 illustrates schematically operating means for acting upon a differential lock, according to an embodiment of the invention;
Figure 5 illustrates schematically operating means for acting upon a differential lock, according to an embodiment of the invention;
Figures 6a-c illustrate schematically various locking mechanisms for operating means for acting upon a differential lock, according to various embodiments of the invention;
Figure 7a illustrates schematically a flowchart of an assembly process for operating means for acting upon a differential lock, according to an embodiment of the invention;
Figure 7b illustrates schematically in more detail a flowchart of an assembly process for operating means for acting upon a differential lock, according to an embodiment of the invention;
Figure 8 illustrates schematically operating means for acting upon a differential lock, according to an embodiment of the invention;
Figure 9 illustrates schematically operating means for acting upon a differential lock, according to an embodiment of the invention;
Figure 10a illustrates schematically a flowchart of an assembly process for operating means for acting upon a differential lock, according to an embodiment of the invention;
Figure 10b illustrates schematically in more detail a flowchart of an assembly process for operating means for acting upon a differential lock, according to an embodiment of the invention;
Figure 11 illustrates schematically a computer device for controlling an assembly robot;
Figure 12 illustrates schematically part of operating means for acting upon a differential lock;
Figure 13 illustrates schematically operating means for acting upon a differential lock, according to an embodiment of the invention;
Figure 14 illustrates schematically operating means for acting upon a differential lock, according to an embodiment of the invention;
Figure 15 illustrates schematically operating means for acting upon a differential lock, according to an embodiment of the invention;
Figure 16 illustrates schematically operating means for acting upon a differential lock, according to an embodiment of the invention;
Figure 17 illustrates schematically operating means for acting upon a differential lock, according to an embodiment of the invention;
Figure 18 illustrates schematically operating means for acting upon a differential lock, according to an embodiment of the invention;
Figure 19 illustrates schematically operating means for acting upon a differential lock, according to an embodiment of the invention;
Figure 20 illustrates schematically operating means for acting upon a differential lock, according to an embodiment of the invention; and
Figure 21 illustrates schematically operating means for acting upon a differential lock, according to an embodiment of the invention.

### DETAILED DESCRIPTION OF THE DRAWINGS

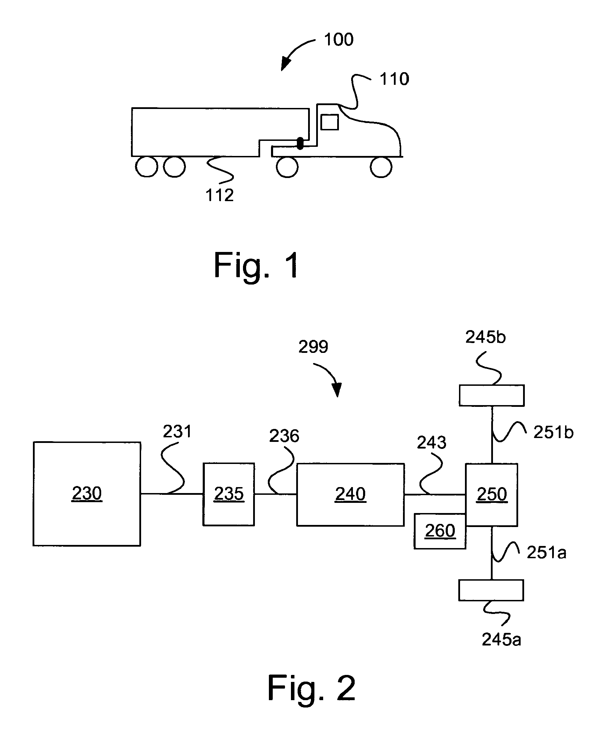

Figure 1 depicts a side view of a vehicle 100. The exemplified vehicle 100 comprises a tractor unit 110 and a trailer 112. The vehicle may be a heavy vehicle, such as a truck or a bus. The vehicle 100 may alternatively be a passenger car. The vehicle 100 is a motor vehicle with at least one differential lock.

Figure 2 depicts a subsystem 299 of the vehicle 100. The subsystem 299 is disposed in the tractor unit 110. The subsystem 299 has an engine 230. The engine 230 may be a combustion engine. The combustion engine may be an engine with six cylinders. The combustion engine may alternatively have four, five or eight cylinders. The combustion engine may be a diesel engine. The combustion engine may alternatively be a petrol, gas or ethanol engine.

The engine 230 has an output shaft 231 connected to a clutch 235. The clutch may for example be of a conventional disc type, such as a two-disc clutch. The clutch 235 is also connected to a shaft 236. The shaft 236 is an input shaft to a gearbox 240. The gearbox 240 has an output shaft 243 adapted to transmitting power from the engine to a number of vehicle wheels 245 in a conventional manner.

The output shaft 243 constitutes an input shaft to a central gear unit 250. The central gear unit 250 may alternatively be called a propeller shaft gear. The central gear unit 250 may also be called a rear axle gear. The central gear unit 250 is adapted to distributing power transmitted from the engine 230 to powered wheels of the vehicle.

A first rear axle 251a is disposed between the central gear unit 250 and a first rear powered wheel 245a. The first rear axle 251 a is adapted to transmitting power from the central gear unit 250 to the first rear powered wheel 245a. A second rear axle 251b is similarly disposed between the central gear unit 250 and a second rear powered wheel 245b.

The central gear unit 250 is equipped with a differential. It is with this differential that the central gear unit 250 can distribute transmitted power to the respective powered wheels 245a and 245b. The central gear unit 250 is also equipped with a differential lock which in an active state provides evenly distributed power distribution to the respective powered wheels 245a and 245b. When the differential lock is activated, the powered wheels 245a and 245b are thus each provided with substantially equal amounts of power. The differential lock of the central gear unit 250 may be activated manually by a driver of the vehicle 100 by means of a control in the driving cab. The differential lock of the central gear unit 250 may also be deactivated manually by a driver of the vehicle 100 by means of the same control in the driving cab. Activation and deactivation of the differential lock are effected by compressed air means fitted to operating means 260 for acting upon the differential lock.

The clutch 235 is adapted to being able to interrupt the power transmission in the driveline which comprises the engine 230, the shaft 231, the clutch 235, the shaft 236, the gearbox 240, the shaft 243, the central gear unit 250, the first rear driveshaft 251 a and the second rear driveshaft 251 b.

The operating means 260 for acting upon the differential lock are associated with the central gear unit 250. According to a version, the operating means 260 are integrated with the central gear unit 250. According to a version, the operating means 260 and the central gear unit 250 are accommodated in a single housing which may also be referred to as a gear housing. The operating means 260 and the central gear unit 250 are described in more detail below.

It should be noted that the vehicle 100 may be equipped with two or more operating means depending on how many differentials (with associated differential locks) the vehicle is equipped with. A four-wheel drive vehicle may be provided with three operating means for acting upon the respective differentials. First operating means may be provided for a differential of the vehicle's rear axle. Second operating means may be provided for a differential of the vehicle's front axle. Third operating means may be provided for a differential of the vehicle's transfer gear. Similarly, a vehicle equipped with eight powered wheels may comprise up to five operating means for acting upon the respective differentials. It should be noted that the operating means are each adapted to acting upon a differential lock of the respective differential.

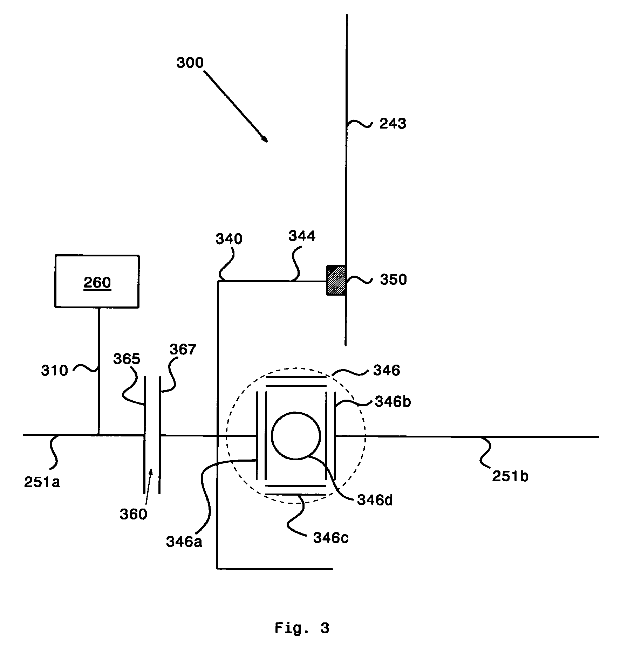

Figure 3 illustrates schematically a subsystem 300 for the vehicle 100. The subsystem 300 comprises the input shaft 243. The input shaft 243 is also referred to as a pinion. The input shaft 243 goes into a bevel gear and is adapted to driving a crown wheel 344 fastened in a differential housing 340. The crown wheel 344 is accommodated in the differential housing 340. The input shaft 243 is disposed in tooth contact with the crown wheel 344 at 350.

The subsystem 300 comprises a differential 346 adapted to distributing propeller shaft torque from the gearbox 240 to the first and second rear powered wheels 245a and 245b respectively. The differential 346 has a first differential wheel 346a via which power can be transmitted by the first rear axle 251a to the first rear powered wheel 245a. The differential 346 has also a second differential wheel 346b via which power can be transmitted by the second rear axle 251b to the second rear powered wheel 245b. The differential 346 has a differential spider 346d with a differential pinion 346c on each spigot therein provided, which pinions are in contact with and drive the differential wheels 346a and 346b each mounted on a respective spline on the first rear axle 251 a and the second rear axle 251 b respectively.

The subsystem 300 comprises a differential lock coupling 360 associated with the first rear axle 251a. The differential coupling 360 comprises substantially two parts. The first part of the differential coupling 360 is referred to as a coupling half 365. The second part of the differential coupling is referred to as a differential housing half 367. The coupling half 365 and the differential housing half 367 are each equipped with engageable teeth. The coupling half 365 is disposed on splines fastened to the first rear axle 251 a.

The operating means 260 are adapted to acting upon the differential lock. The operating means 260 comprise a fork 310 which can act upon the differential coupling 360 so that a position for the coupling can be chosen, i.e. so that switching can be effected between a coupled position and an uncoupled position and vice versa. Switching between coupled position and uncoupled position and vice versa can be effected by the driver of the vehicle 100 by means of a control or switching device provided in a driving cab of the vehicle. The control and equipment for implementing the switching, and also signal lines or the like, are prior art and not illustrated in any of the accompanying drawings.

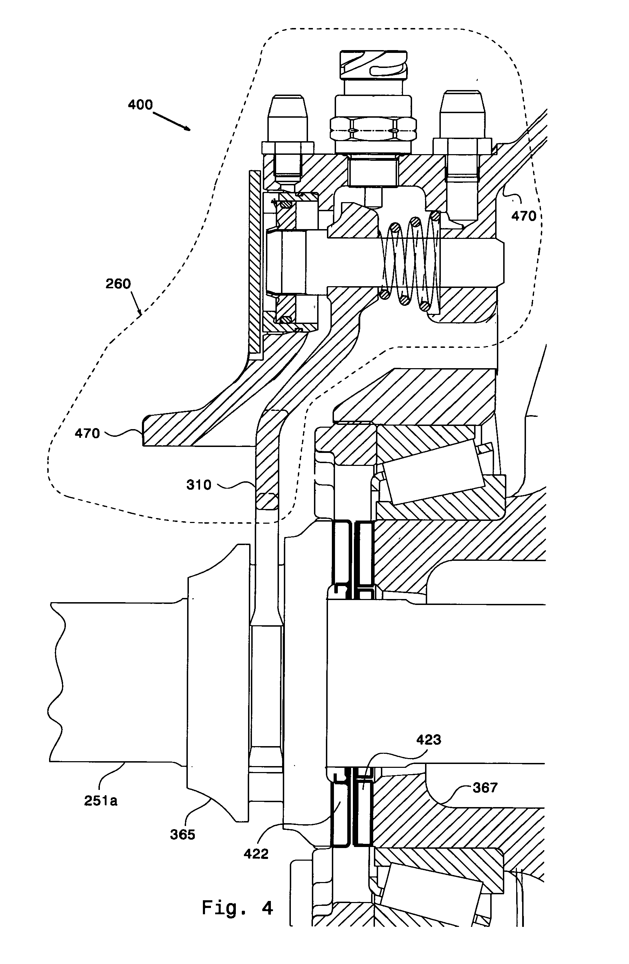

Figure 4 illustrates schematically a subsystem 400 comprising the operating means 260 for acting upon the differential lock of the vehicle 100. The differential coupling 360 comprises the coupling half 365 and the differential housing half 367. The coupling half 365 is provided with a first set of coupling teeth 422. The differential housing half 367 is provided with a second set of coupling teeth 423. The two sets of coupling teeth 422 and 423 may each comprise any desired number of coupling teeth adapted to being brought into engagement.

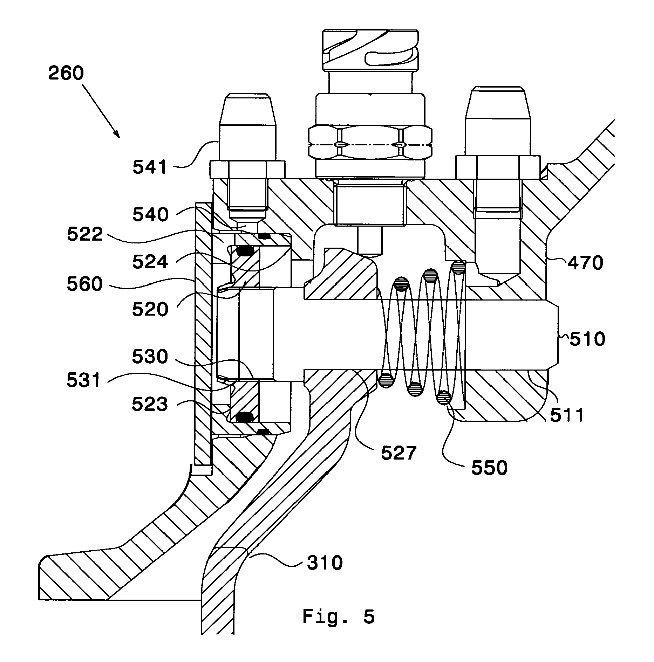

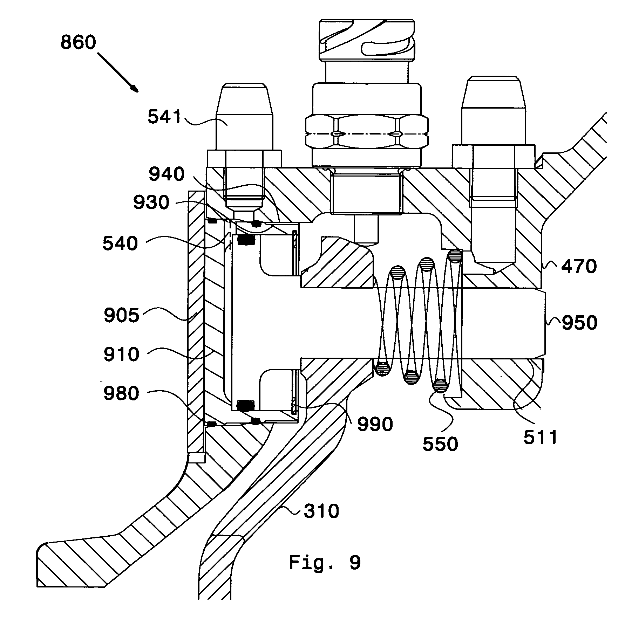

The coupling half 365 is adapted to being movable on the first driveshaft 251a. The coupling half 365 is mounted on a number of splines on the first driveshaft 251a. The coupling half 365 can be moved to and fro in a longitudinal direction on the first driveshaft 251a by the fork 310. The fork 310 is attached to the coupling half 365. The fork 310 is suspended in the operating means 260. Two different embodiments of the operating means 260 are explained in more detail below with reference to Figures 5 and 9 respectively. The fork 310 is also referred to as a switching device.

The fork 310 is adapted to acting upon the coupling half 365 so that the latter can assume a desired position and thereby close or open the differential coupling 360. According to a version, the coupling half 365 may have a first position relative to the differential housing half 367. In the first position, the coupling is open, i.e. the first and second sets of coupling teeth 422 and 423 are not brought into engagement. The coupling half 365 may also have a second position relative to the differential housing half 367. In the second position the differential coupling 360 is closed. In the second position, in which the teeth 422 and 423 are in engagement, the first rear axle 251 a is locked together with a package which comprises the crown wheel 344, the coupling half 365 and the differential housing half 367. Since these elements will rotate at the same speed, the differential wheels 346a and 346b, and hence the two rear axles 251a and 251b, have substantially the same rotation speed and a differential lock action is thus effected. It is important to avoid undesirable bending stresses of the teeth when the differential coupling 360 is in the second position. Undesirable bending stresses of the differential coupling may be caused by setting of the operating means 260. It is desirable that the two sets of teeth 422 and 423 of the coupling half 365 and the differential housing half 367 respectively in the coupled position do not bottom or be in a position in which bending stresses exceed a certain level. This embodiment provides a structure whereby the clearance in the differential coupling can easily be set to avoid the occurrence of undesirable contact patterns in a coupled position of the differential coupling 360. An undesirable contact pattern may be too much engagement whereby a small surface of the tip of each tooth has contact. This is undesirable in that the teeth risk being sheared off or being subjected to high bending stresses at the root of each tooth. An undesirable contact pattern may be too little engagement when the teeth bottom. The teeth bottom when the upper plane of a tooth comes into contact with the lower plane of a tooth. This is undesirable in that the fork will then be positioned obliquely and become subject to bending stresses. Oblique positioning will cause very high surface pressure in a groove between the fork and the coupling half because of the fork not being situated straight in grooves of the coupling half. Oblique positioning will angle the coupling half relative to a centreline of the driveshaft and the differential housing, resulting in sliding between the teeth in engagement during rotation.

In this version, the operating means 260 are integrated with the gear housing 470.

Figure 5 illustrates schematically the operating means 260 for acting upon the differential lock. A pin 510 is provided in the operating means 260. The pin has a first end and a second end. In this example, the second end of the pin is inserted in a cavity 511 provided in the gear housing 470. The cavity 511 provides support for the second end of pin 510. The pin 510 is supported for sliding in the cavity 511 of the valve housing 470. The fork 310 depicted in Figure 4 is suspended on the pin 510. In this version, the fork 310 has running through it a hole 527 in which the pin 510 runs. The hole 527 is situated at a first end of the fork 310. A second end of the fork 310 is fastened to the coupling half 365, as explained with reference to Figure 4.

A piston 520 is disposed in a cylinder 522 which is fitted in the operating means 260. The piston 520 has a first end surface and a second end surface. The first end surface faces towards a cover 560. The cylinder 522 is fastened to the gear housing 470. The piston 520 is disposed in the cylinder 522 in such a way that it can run between two extreme positions, viz. a first extreme position and a second extreme position. In the first extreme position, the piston 520 abuts against a support in the form of an edge 523 of the cylinder 522. In the second extreme position, the piston 520 abuts against an edge 524 of the gear housing 470. The pin 510 is detachably fastened to the piston 520 by threads. The pin 510 is provided with a first set of threads 530. The piston 520 is provided with a second set of threads 531. The pin 510 and the piston 520 are connected together by the threads. The pin 510 and the piston 520 are capable of mutual axial movement by means of the threads 530 and 531. Figure 4 shows that the pin 510, the piston 520 and the cylinder 522 are rotationally symmetrical.

The cylinder 522 is provided with a duct 540. Compressed air can be applied to the cylinder 522 by compressed air means 541. Application of compressed air may be effected by means of the control described above for activating/deactivating the differential lock. When compressed air is applied to the cylinder 522, the piston 520 is pushed towards its second extreme position and carries with it the pin 510 threaded to it which acts upon the fork 310, whereupon the coupling half 365 of the differential coupling 360 on the first rear axle 251a will move and couple with the differential housing half 367. When a certain amount of compressed air has been supplied, the piston 520 will reach its extreme position at the edge 524.

A coil spring 550 is disposed round the pin 510. The spring 550 is fitted between the fork 310 and an inner wall of the gear housing 470. When the cylinder is emptied of compressed air, the spring 550 can push the piston 520 back to its first extreme position, whereupon a package comprising the coupling half 365, the fork 310 and the pin 510 will follow correspondingly and the differential coupling 360 will uncouple. The coil spring 550 is referred to as a spring means. The coil spring 550 is a pressure means. Other types of suitable pressure means may replace the coil spring 550.

The cover 560 is fitted adjacent to the first end of the pin 510. The cover 560 is therefore also fitted adjacent to the piston when the latter is in its first extreme position. The cover 560 is adapted to covering a mechanism which comprises inter alia the cylinder 522, the piston 520 and the pin 510 which is provided with the fork 310 and the spring 550. The cover may be fastened by any desired fastening device, e.g. one or more screws.

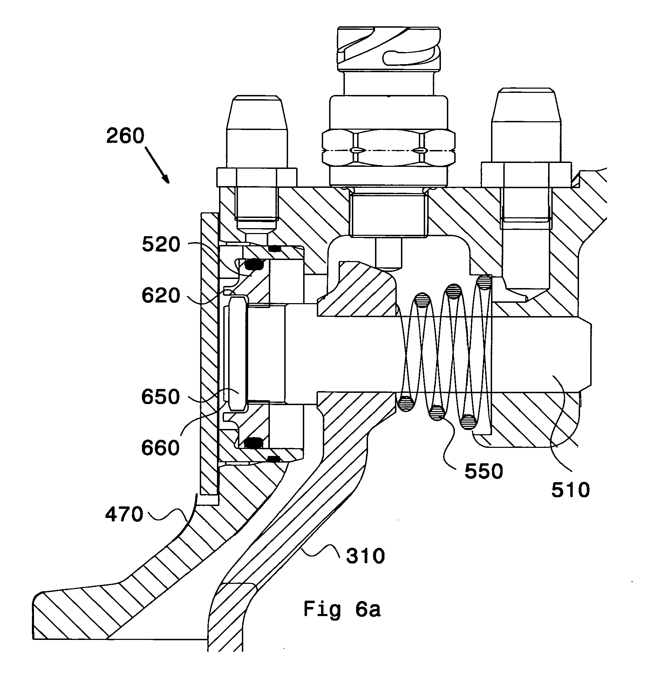

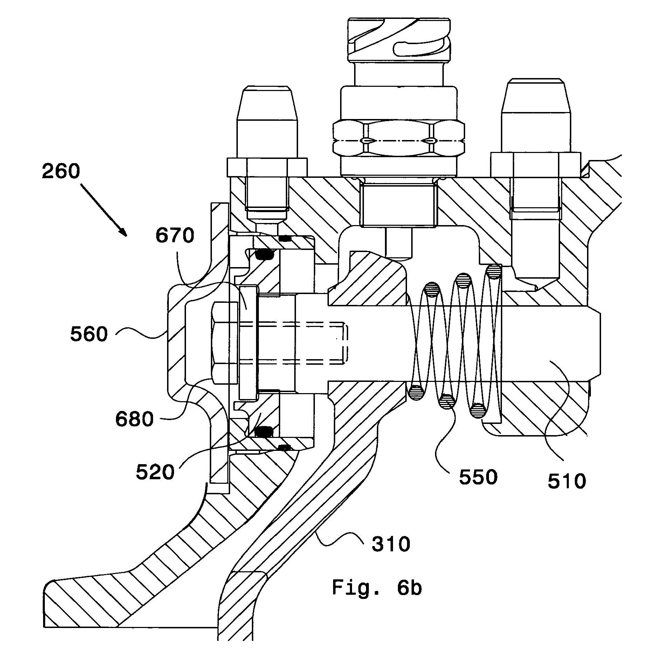

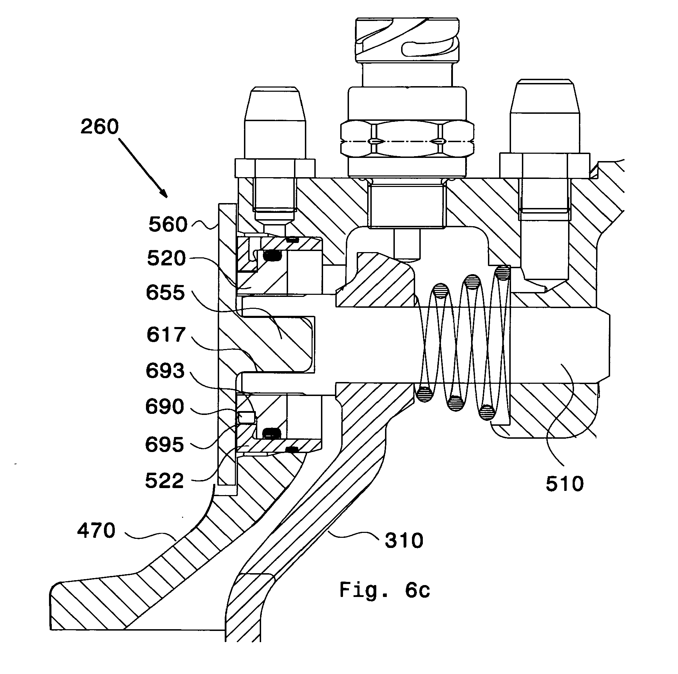

To fasten the pin 510 to the piston 520 relative to one another in order to prevent their moving relative to one another, various types of locking mechanisms may be used. Three examples of different locking mechanisms are described in more detail below with reference to Figs. 6a, 6b and 6c respectively.

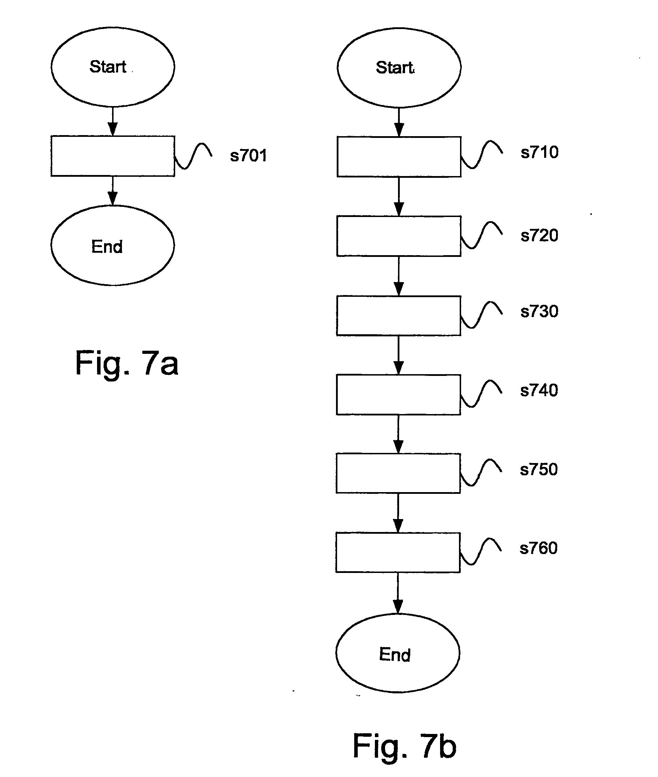

Figure 6a illustrates schematically a first locking mechanism of the operating means 260 for acting upon the differential lock of the vehicle 100, according to an embodiment of the invention. In this first locking mechanism, the piston 520 and the pin 510 are adapted to being locked together. A cylindrical pin 650 may be used for physically preventing the piston 520 and the pin 510 from rotating relative to one another. The pin 650 has a length which is larger than a diameter of the end of the pin 510 where the pin 650 is fastened. The pin 650 may be clamped firmly in a milled groove 660 in the first end of the pin 510. The surrounding part of the firmly clamped part of the pin 650 is adapted to being in a radially milled groove 620 in the piston 520. The milled groove 620 in the piston 520 is adapted to holding the pin 650. The pin 650 can thus effect a locking action between the pin 510 and the piston 520 after the operating means have been set as described with reference to Figures 7a and 7b.

Figure 6b illustrates schematically a second locking mechanism of the operating means 260 for acting upon the differential lock of the vehicle 100, according to an embodiment of the invention. In this version, a piece of sheet metal 670 is fastened by one or more screws 680 between the pin 510 and the piston 520, thereby effecting a locking function. The cover 560 has in this version a bottle top-like shape to provide space for the head of the screw 680.

Figure 6c illustrates schematically a third locking mechanism of the operating means 260 for acting upon the differential lock of the vehicle 100, according to an embodiment of the invention. In this version, the piston 520 and the pin 510 are adapted to being locked separately. In this version, the piston 520 is locked about its direction of rotation by a key 690. The cylinder 522 is fastened in the gear housing 470 and has running through it a groove 695 to accommodate the key 690. The piston 520 has in this case a keyway 693 adapted to accommodating the key 690. Engaging the key 690 in the piston 520 effects a locking function between the piston 520 and the gear housing 470.

The pin 510 may be locked by a protrusion 655 of the cover 560, the cover being fitted firmly to the gear housing 470. The protrusion 655 may for example be hexagonal. The first end of the pin 510 is provided with a corresponding hexagonal hole 617 which can accommodate the protrusion 655. The result is a locking action between the pin 510 and the cover 560 and hence also with the gear housing 470.

Figure 7a illustrates schematically a flowchart of an assembly process for operating means for acting upon a differential lock of a motor vehicle, according to an embodiment of the invention.

The assembly process comprises a first method step s701 comprising the step of fitting a configuration which has a first end and a second end such that the first end is supported for sliding in a cylinder fitted in a gear housing and the second end is supported for sliding in the gear housing, the configuration being movable between a first extreme position and a second extreme position, and such that a switching device is fastened to the configuration between the first and second ends and is adapted to acting upon a coupling half in a differential coupling of the differential lock so that the differential lock is deactivated when the configuration is in the first extreme position and is activated when the configuration is in the second extreme position. Step s701 comprises also the step of setting a position of the configuration relative to the gear housing such that a predetermined clearance in the differential coupling is effected when the configuration is in the second extreme position, which setting is done on the basis of a state of the differential coupling in which an undesirable contact pattern occurs. After step s701 the method ends.

The step of setting the position of the configuration relative to the gear housing may comprise the steps of first acting upon the differential coupling so that an undesirable contact pattern occurs, and thereafter setting the position of the configuration relative to the gear housing so that a predetermined clearance in the differential coupling is effected.

The method may further comprise the step of fitting spring means round the configuration between the switching device and the gear housing where the second end of the configuration is supported, in which case the spring is adapted to exerting a pushing force to urge the configuration towards its first extreme position.

The method may further comprise the step of fitting a locking mechanism for locking the configuration in the set position relative to the gear housing whereby a predetermined clearance in the differential coupling is effected when the configuration is in the second extreme position.

The method may further comprise the step of fitting a cover to the gear housing in order to cover the configuration. The method steps may be performed manually by an operator. Alternatively the method steps may be performed by an assembly robot adapted to performing the method steps as above.

Figure 7b illustrates schematically in more detail a flowchart of an assembly process for operating means for acting upon a differential lock of the vehicle 100, according to an embodiment of the invention.

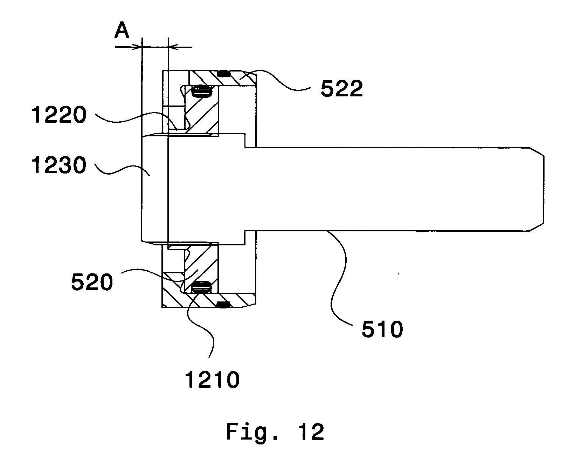

The assembly process comprises a first method step s710 in which a preassembly is performed. The object of preassembly is to be able to provide a production line where assembly of motor vehicles takes place with a package which comprises the pin 510, the piston 520 and the cylinder 522. The package may thus be fitted on a production line to, for example, a gear housing of the vehicle 100. The advantage of this preassembly is to reduce the number of fitting operations performed on the production line and thereby improve the possibility of increasing the vehicle production rate. Figure 12 illustrates schematically a configuration related to step s710.

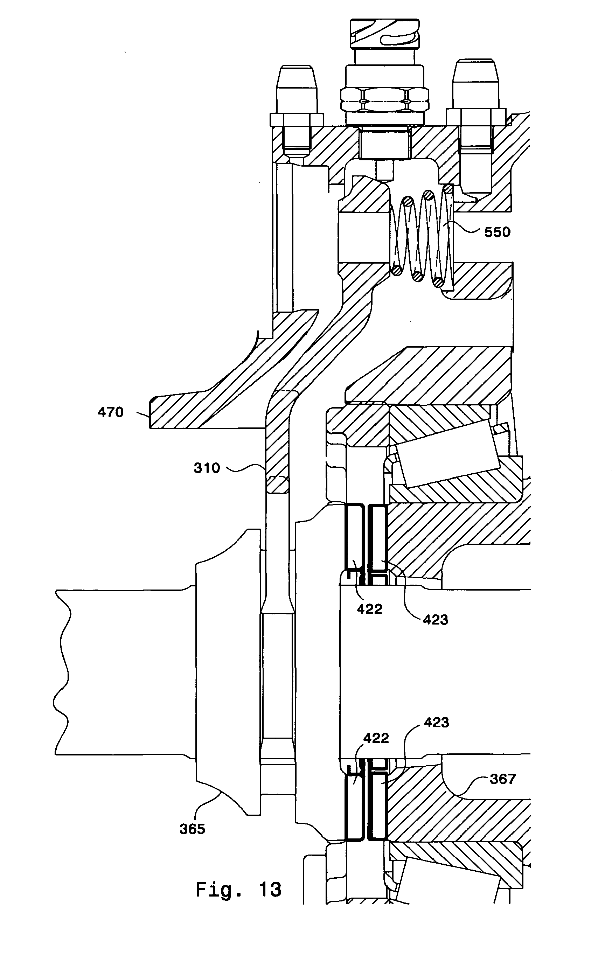

In method step s710, O-rings 1210 are put in place in the cylinder 522 and the piston 520. Thereafter, the pin 510 is screwed into the piston 520 by means of the threads 530 and 531 so that a distance A is created between a first end surface of the pin 510 at its first end and a first end surface of the piston 520 at its first end. To this end, a lip 1220 of the piston 520 has to face towards a groove 1230 in the pin 510. A final step of this preassembly stage comprises fitting the piston 520 and the pin 510 together in the cylinder 522. Preassembly may with advantage be performed by a robot adapted to the purpose. This is followed by a step s720. Figure 13 illustrates schematically a configuration related to step s720.

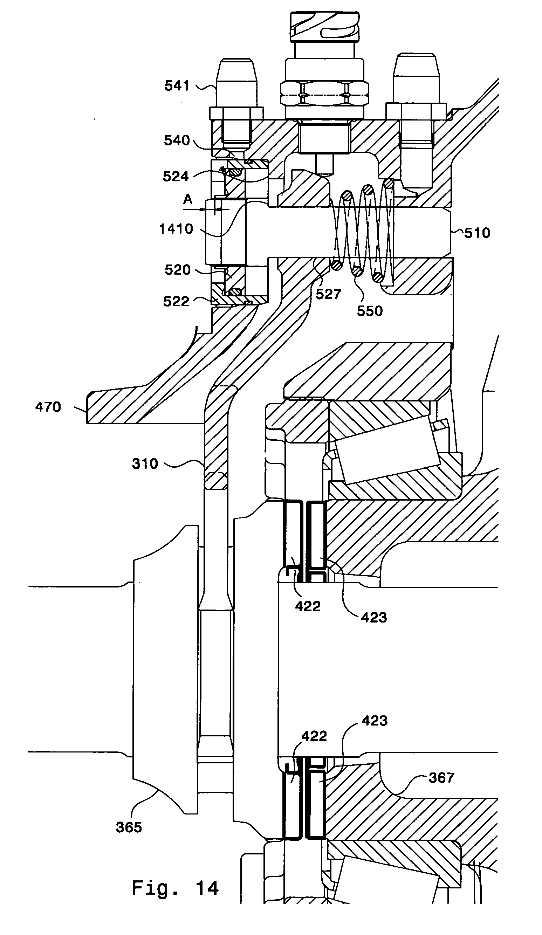

Prerequisites for effecting method step s720 may be that the central gear unit 250 is already fitted in the vehicle 100, that the bevel gear 344 is adjusted and that the coupling half 365 and the differential housing half 367 of the central gear unit 250 (the differential coupling 360) are correctly positioned. In step s720, the fork 310 is fitted to the coupling half 365 so that they are coupled together in a desirable manner. The spring 550 is applied in the gear housing. Thereafter the fork 310 and the coupling half 365 are fitted "from below" to the space for the operating means 260 for acting upon the differential lock. The fork 310 is placed against the spring 550. This is followed by a next step s730. Figure 14 illustrates schematically a configuration related to step s730.

In method step s730 the operating means 260 for acting upon the differential lock are fitted in the gear housing 470. The package comprising the pin 510, the piston 520 and the cylinder 522 will still have the distance A.

The pin 510 of the package is thereafter passed through the hole 527 in the fork 310, through the spring 550 and finally into the cavity 511 of the gear housing until the cylinder 522 of the package reaches the stop 524 of the gear housing. The cylinder 522 will then have a known position relative to the gear housing and the package will be situated in a predetermined manner. It may be noted that the package can be rotated in this position without affecting its functionality. The duct 540 to allow air applied by the compressed air means 541 to flow through is situated between the gear housing 470 and the cylinder 522. The duct 540 may thus assume any rotational position and still function in a desirable manner, viz. make it possible for compressed air from the compressed air means 541 to act upon the piston 520.

Owing to the distance A defined above, an edge 1410 of the pin 510 will have no contact with the fork 310, and the spring 550 will exert the pushing action on the fork 310. In this situation there will be a relatively large clearance between teeth 422 of the coupling half 365 and teeth 423 of the differential housing half 367.

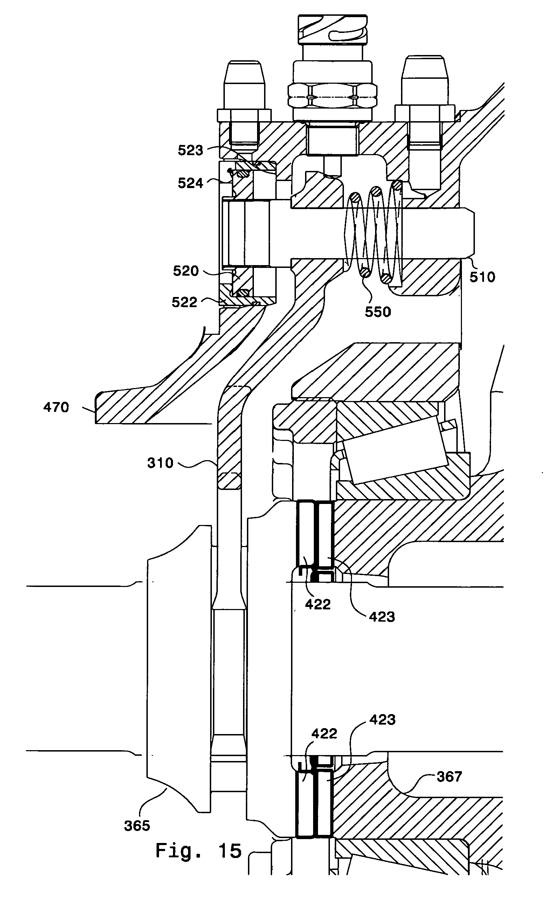

It should be noted that the clearance between the respective sets of teeth 422 and 423 of the differential coupling 360 in this situation is not optimum and setting of the operating means needs to be performed. This setting is described below with reference to the subsequent steps of this assembly process. Step s730 is followed by a step s740. Figure 15 illustrates schematically a configuration related to step s740.

In method step s740, an adjustment of the operating means 260 is performed in order to act upon the differential lock so that a correct clearance is effected between the teeth 422 of the coupling half 365 and the teeth 423 of the differential housing half 367. The term "correct clearance" is herein defined as a clearance which corresponds to an appropriate contact pattern between the teeth 422 and 423 of the differential coupling 360 when the latter is in a coupled state. The adjustment is also relevant in a perspective where individual variations of the differential housing half 367 occur due to the configuration and transmission ratio of the bevel gear 344. Certain machining tolerances may also affect these individual variations.

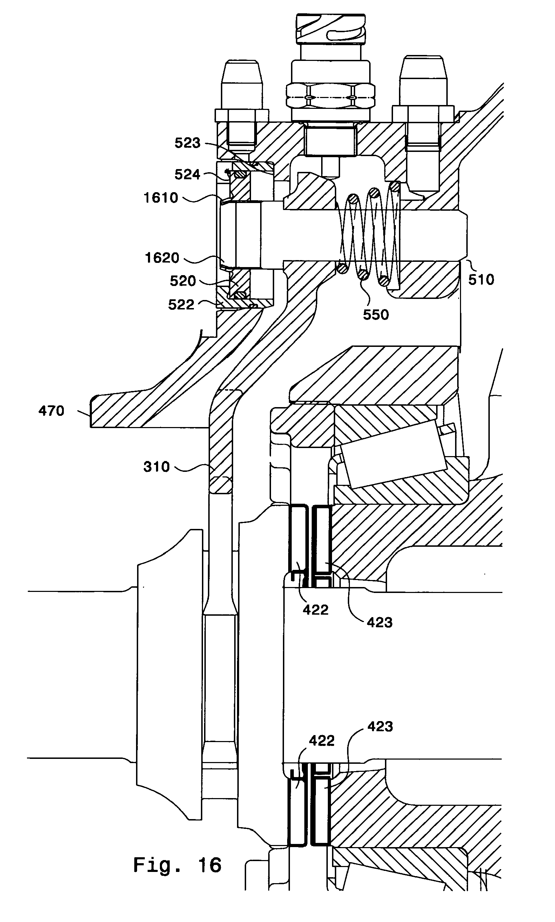

A first part of the setting of the operating means 260 for acting upon the differential lock comprises screwing in the pin 510 relative to the piston 520 and the cylinder 522. The pin 510 acts upon the fork 310 and hence upon the coupling half 365. When an upper plane of the teeth 422 of the coupling half 365 encounters a lower or upper plane of the teeth 423 of the differential housing half 367, a torque peak occurs. This part of the setting is conditioned by the piston 520 abutting against the edge 524 in the cylinder 522 when the cylinder 522 is in contact with its stop in the form of the edge 523 of the gear housing. This is due to the spring 550 acting upon the fork 310 and the pin 510. Owing to the connection between the pin 510 and the piston 520, the spring 550 pushes back also the piston 520. It is important that both the cylinder 522 and the piston 520 are in their respective extreme positions defined by the respective edges 523 and 524 throughout the setting process, since these positions represent their respective starting positions, and if the latter are incorrect, the contact pattern between the two sets of teeth 422 and 423 respectively will be affected. Step s740 is followed by a step s750. Figure 16 illustrates schematically a configuration related to step s750.

In method step s750, correct clearance in the differential coupling 360 is set as explained below. As a pitch of the threads in the piston 520 and the pin 510 is known, the pin 510 can be rotated back a predetermined number of turns, or parts of a turn, which corresponds to a desired clearance between the teeth 422 and 423 in the differential coupling 360. Account has of course to be taken here of whether the upper plane of the teeth 422 of the coupling half 365 has been in contact with the upper or lower plane of the teeth 423 of the differential housing half 367. Here again, the piston 520 and the cylinder 522 abut against the respective edges 524 and 523. When the pin has been screwed back the correct number of turns, the pin 510 has to be locked relative to the piston 520 so that the desired clearance in the differential coupling 360 will not change over time. It should be noted that the operating means 260 need no further adjustment on the occasion of any renewal of them, e.g. upon replacement of O-rings 1210 etc. The locking may be effected by inserting a flange 1610 on the piston 520 in a groove 1620 in the pin 510. The material of the piston 520 which is within the outside diameter of the pin 510 effects a locking action between the two parts so that they cannot rotate relative to one another. It should however be noted that there is a plurality of variant locking mechanisms suitable for this purpose, some of which are indicated with reference to Figures 6a, 6b and 6c. The distance A described above will have changed after step s750.

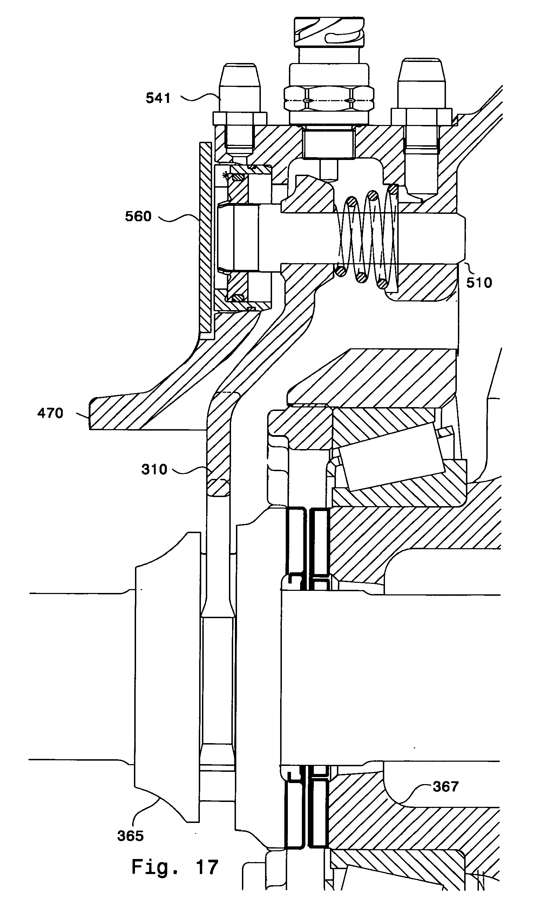

The whole or parts of method steps s720, s730, s740 and s750 may be performed manually or by using a programmable screwdriver as torque limiter and a programmed step whereby the screwdriver reverses a certain number of turns, or by an assembly robot programmed for the purpose. Step s750 is followed by a step s760. Figure 17 illustrates schematically a configuration related to step s760.

In method step s760 the cover 560 is fitted to the gear housing 470 with a packing, or some other seal, e.g. an O-ring. If the pin 510 has not been adjusted and the distance A defined above still remains unchanged, this would be noticed when fitting the cover 560 to the gear housing 470. Step s760 may therefore afford quality assurance that the fitting of the operating means 260 and the setting have been done correctly. Step s760 may be performed manually or by an assembly robot programmed for the purpose.

It should be noted that in this version the fitting may be effected using the compressed air applied by the compressed air means 541, in which case a plate temporarily fastened to the outside of the gear housing may be used as a seal. An advantage of using compressed air during the adjustment is that tolerances of the respective sets of teeth of the coupling half 365 and the differential housing half 367 can be zeroed. After step s760, the method ends.

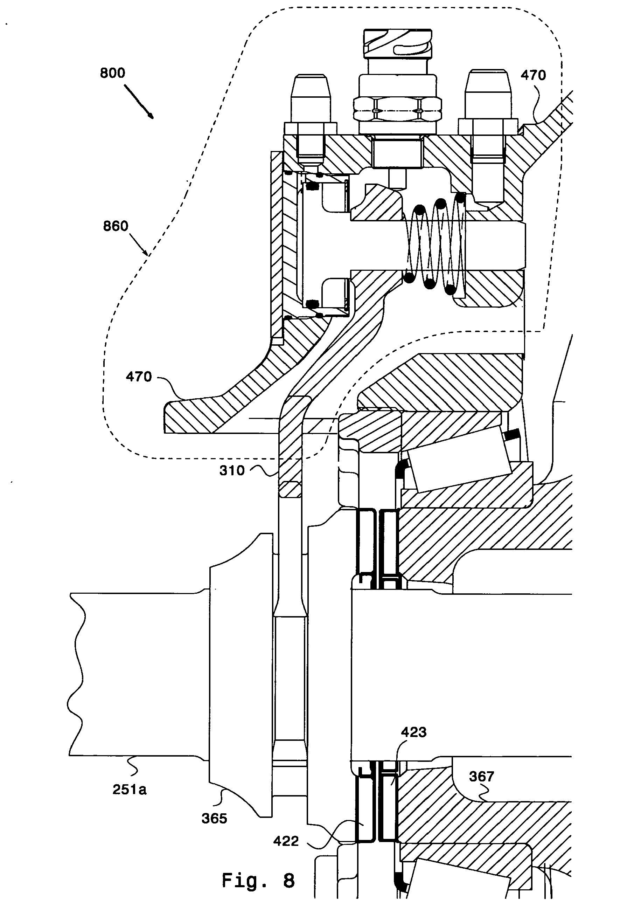

Figure 8 illustrates schematically operating means for acting upon a differential lock of the vehicle 100, according to an embodiment of the invention. Figure 8 illustrates schematically a subsystem 800 for a vehicle 100. The subsystem 800 comprises operating means 860 for acting upon the differential lock. A subsystem 800 comprises parts identical with certain parts of the subsystem 400 described with reference to Figure 4. The operating means 260 explained with reference to Figure 4 are replaced in the subsystem 800 by alternative operating means 860 adapted to acting upon the differential lock of the vehicle. The operating means 860 are described in more detail below with reference to Figure 9.

Figure 9 illustrates schematically operating means 860 for acting upon the differential lock of the vehicle 100, according to an embodiment of the invention. Figure 9 illustrates schematically an alternative embodiment of operating means for acting upon a differential lock. In this embodiment, the pin 510 and the piston 520 which are, for example, described with reference to Figure 5 take the form of a single element 950. The element 950 is herein referred to as a pushrod 950. The pushrod 950 has a first end and a second end. The first end is supported by, and adapted to being slidable in, a cylinder 910. The cylinder 910 has an external thread 930 which may be disposed in an internal thread provided in the gear housing 940. The other end of the pushrod 950 is inserted into, and supported in, the cavity 511 of the gear housing 470, similar to how the pin 510 is supported in the gear housing 470 in Figure 5. The fork 310 is suspended on the pushrod 950 and adapted to acting upon a differential coupling 360 of the vehicle 100. The piston integrated in the element 950 has first and second extreme positions. In the second extreme position, the piston abuts against a locking ring 990 disposed in the cylinder 910. The spring 550 is fitted in such a way that it surrounds the pushrod 950 and is adapted to pushing the pushrod 950 back towards its first extreme position when compressed air from the compressed air means 541 is not applied. Here again there is in the cylinder 910 a duct 540 which allows compressed air to flow to and fro.

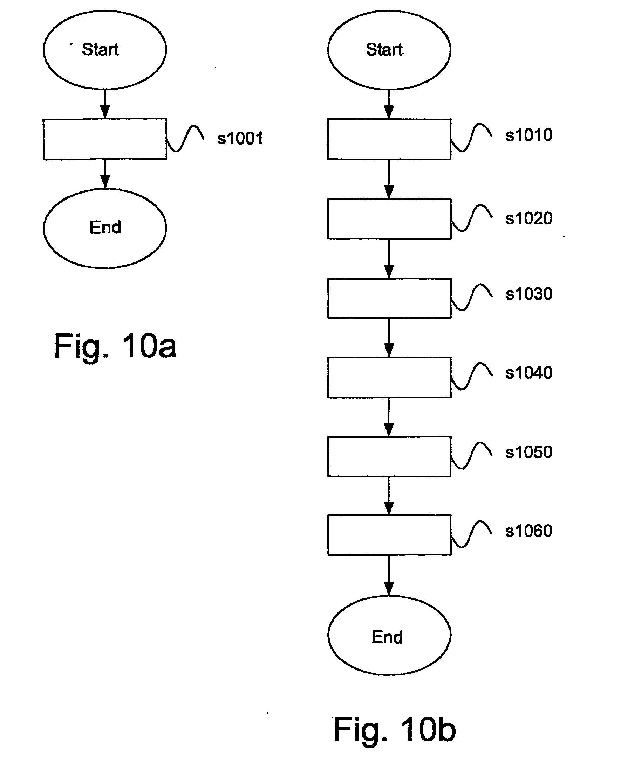

Figure 10a illustrates schematically a flowchart of a method for fitting of operating means 860 for acting upon a differential lock of a vehicle 100, according to an embodiment of the invention. The method comprises a step s1001. Step s1001 comprises the partial step of fitting a pushrod 950 which has a first end and a second end so that the first end is supported for sliding in the cylinder 910 fitted in the gear housing 470 and the second end is supported for sliding in a cavity 511 in the gear housing 470, whereby the configuration is movable between a first extreme position and a second extreme position, and such that the fork 310 is fastened to the pushrod between the first and second ends and is adapted to acting upon a coupling half 365 in a differential coupling 360 of the differential lock so that the differential lock is deactivated when the configuration is in the first extreme position and is activated when the configuration is in the second extreme position. The method comprises also the partial step of setting a position of the configuration relative to the gear housing 470 such that a predetermined clearance in the differential coupling 360 is effected when the configuration is in the second extreme position, on the basis of a state of the differential coupling in which there is an undesirable contact pattern. This setting is effected by screwing the cylinder into the gear housing to create contact between the coupling half 365 and the differential housing half 367. Thereafter the cylinder 910 is rotated back a certain length to create correct clearance in the differential coupling 360. After step s1001, the method ends.

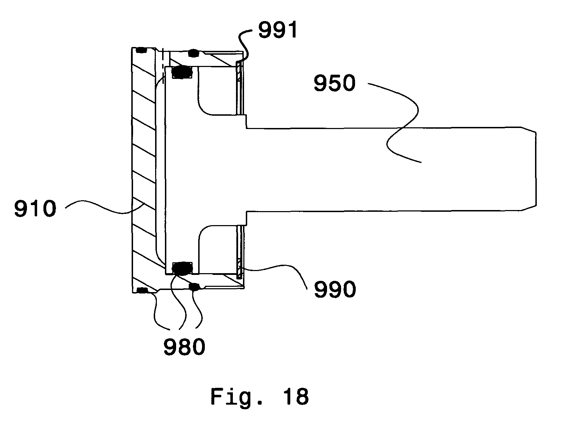

Figure 10b illustrates schematically in more detail a flowchart of an assembly process for a differential lock, according to an embodiment of the invention. Figure 18 illustrates schematically a configuration related to a first step s1010.

The assembly process comprises the first method step s1010 in which a preassembly is performed. The object of the preassembly is to be able to provide a production line where assembly of motor vehicles takes place with a package comprising the pushrod 950, the cylinder 910, O-rings 980 and a locking ring 990. The package may thus be fitted on a production line to, for example, a gear housing of the vehicle. The advantage of this preassembly is to reduce the number of fitting operations performed on the production line and thereby enhance the possibility of increasing the vehicle production rate. Step s1010 comprises applying O-rings and fitting the pushrod 950 in the cylinder 910. The locking ring 990 is fitted in a groove 991 in the cylinder 910. The locking ring 990 is adapted to constituting a stop position for the pushrod 950 and will help to prevent the pushrod 950 from sliding out from the cylinder 910 during the fitting operation. Step s1010 is followed by a step s1020.

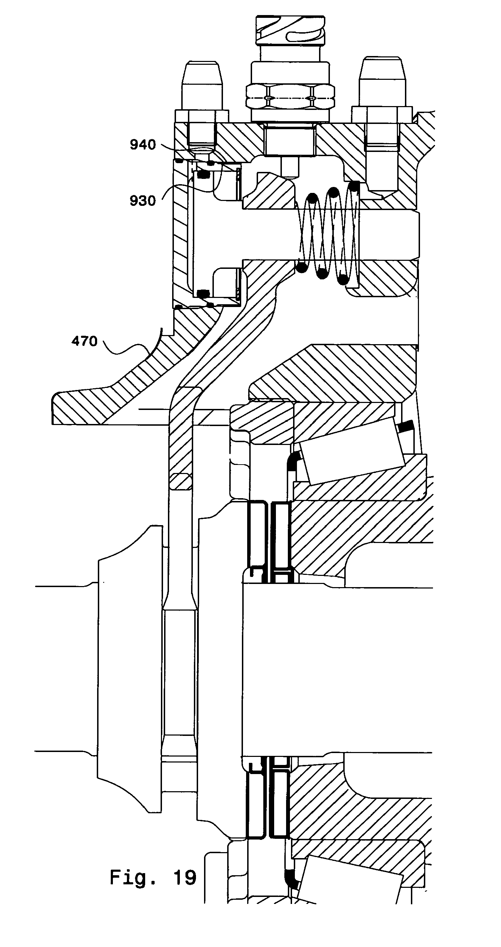

In method step s1020 a package comprising the preassembled parts is fitted in a substantially similar way to the package in step s720 described above with reference to Figure 7b. Step s1020 is followed by a step s1030. Figure 19 illustrates schematically a configuration related to step s1030

In method step s1030, the package arising from the preassembly is fitted in the gear housing 470. The package is rotationally symmetrical, which simplifies fitting. Here again there is a surrounding air gap capable of receiving compressed air.

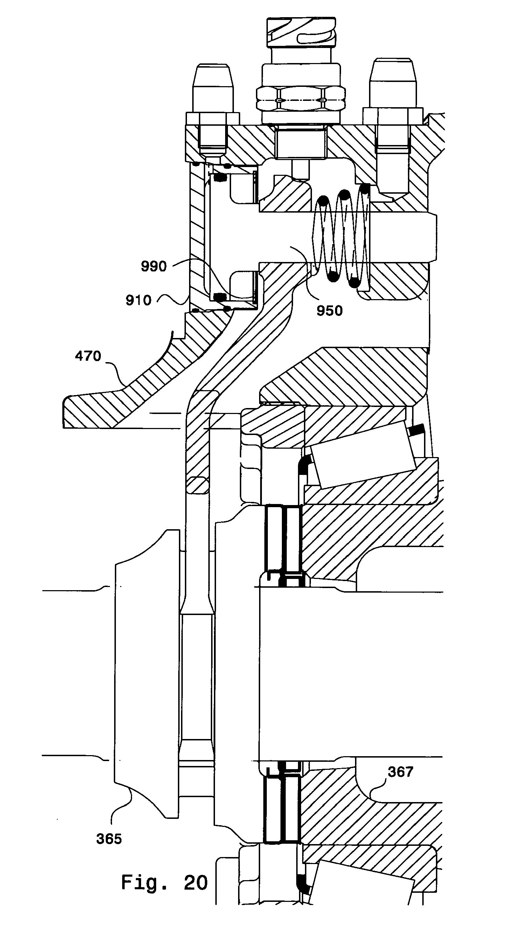

Unlike the configuration of the operating means 260 depicted in Figure 5, there is in this case no stop for the cylinder in the gear housing 470, which has instead an internal thread 940 which can be screwed with an external thread 930 of the cylinder 910. Step s1030 is followed by a step s1040. Figure 20 illustrates schematically a configuration related to step s1040.

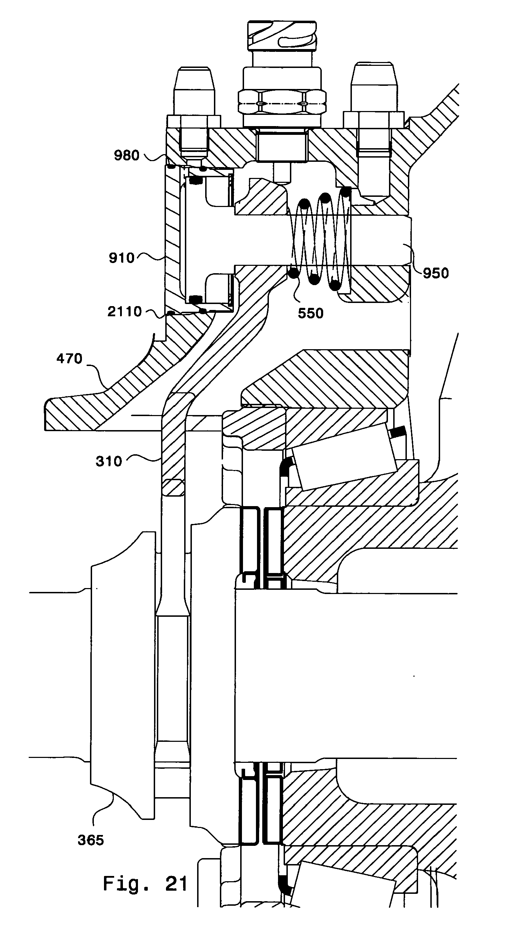

In method step s1040 the cylinder 910 is screwed into the gear housing to create contact between the coupling half 365 and the differential housing half 367. This may be done with or without application of compressed air. In this case the pushrod 950 may bear against two different locations in the cylinder 910, viz. either in a first position (as depicted in Figure 20) or in a second position (against the locking ring 990). It should be noted that it is important to have knowledge of the position of the pushrod 950 relative to the cylinder 910. When the cylinder 910 is screwed into the gear housing 470, the pushrod 950 accompanies it and pushes forward the fork 310 and hence the coupling half 365. When the coupling half 365 reaches the differential housing half 367, a torque peak occurs in the same way as described above with reference to Figure 7b. Step s1040 is followed by a step s1050. Figure 21 illustrates schematically a configuration related to step s1050.

In method step 1050 the cylinder 910 is rotated back a certain length to create correct clearance in the differential coupling 360. If compressed air has been used during the fitting process, it may with advantage be deactivated at this stage. Thereafter the spring 550 pushes back the fork 310 and the pushrod 950. The coupling half 365 is thus also moved sideways.

Thereafter the cylinder 910 is locked relative to the gear housing 470. This may be effected in a number of different ways. One way is to apply a flange 2110 provided in the cylinder 910 against the gear housing 470.

Method steps s1020, s1030, s1040 and 1050 may be performed manually or by using a programmable screwdriver. Method steps s1020, s1030, s1040 and s1050 may also be effected by a robot programmed for the purpose. Step s1050 is followed by a step s1060.

In method step s1060 a cover (not depicted in Figure 21) is fitted to the operating means 860 for acting upon the differential lock. In a version, this cover may also lock the cylinder 910. Step s1060 is optional, since the cylinder 910 will already be covered. The cover may with advantage protect the O-rings 980 of the pushrod 950 from external influences which might cause degradation of them. After step s1060, the method ends.

Both the assembly process described with reference to Figures 7a and 7b and the assembly process described with reference to Figures 10a and 10b afford at least the following advantages a) to f):
a) Rapid and simple adjustment of the operating means for acting upon the differential lock;
b) Dismantling which in prior art was necessary because of an incorrectly fitted spacing washer is obviated by the setting possibilities of the setting means;
c) Enhanced fitting quality in that all the fitting steps involved can be verified and there is no need for individual assessment by fitters;
d) It is easy to ascertain visually whether any fitting error has been committed. The configuration means that no so-called masked fitting is necessary and the configuration is fitted from only one direction;
e) No need for measurement of any parts of the configuration or distances between parts of the configuration before fitting commences;
f) Simplified logistics in that use of spacing washers is eliminated. Use and handling of spacing washers is a well-known problem in various assembly processes today;
g) The methods allow a choice of whether or not to apply compressed air to the operating means; and
h) Advantages a) to g) above all result in a better and more stable assembly flow on a vehicle production line.

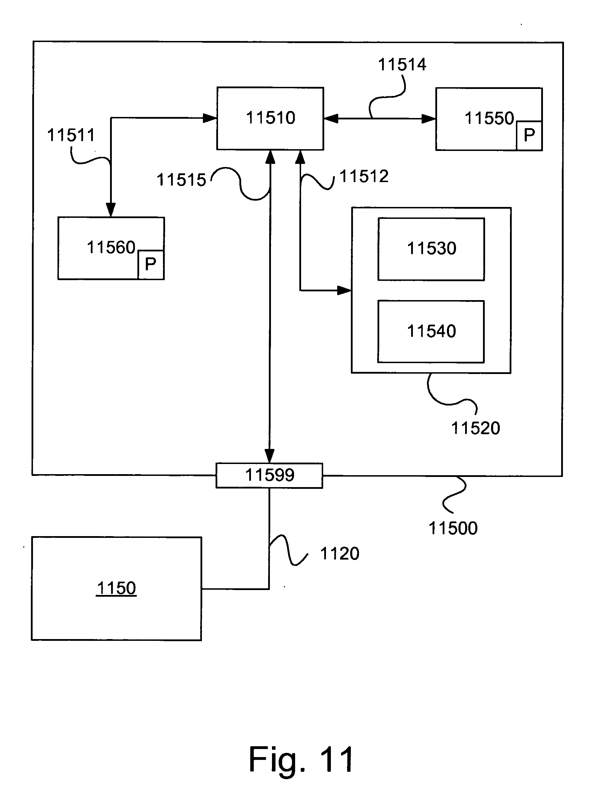

Figure 11 illustrates schematically a computer device for controlling an assembly robot. Figure 11 depicts a diagram of a version of a computer device 11500. The device 11500 comprises a non-volatile memory 11520, a data processing unit 11510 and a read/write memory 11550. The non-volatile memory 11520 has a first memory element 11530 in which a computer programme, e.g. an operating system, is stored for controlling the function of the device 11500. The device 11500 further comprises a bus controller, a serial communication port, I/O means, an A/D converter, a time and date input and transfer unit, an event counter and an interruption controller (not depicted). The non-volatile memory 11520 has also a second memory element 11540.

A computer programme P comprising routines for fitting of operating means for acting upon a differential lock of a motor vehicle as described above is provided. The programme P comprises routines for fitting of operating means in accordance with the innovative method herein described. The programme P may be stored in an executable form or compressed form in a memory 11560 and/ or in a read/write memory 11550.

Where it is stated that the data processing unit 11510 performs a certain function, it means that the data processing unit 11510 effects a certain part of the programme which is stored in the memory 11560 or a certain part of the programme which is stored in the read/write memory 11550.

The data processing device 11510 can communicate with a data port 11599 via a data bus 11515. The non-volatile memory 11520 is intended for communication with an assembly robot via a data bus 11512. A link 1120 may be connected to an assembly robot 1150 via the data port 11599. Alternatively, the computer may be integrated in, and constitute a control unit for, the robot 1150.

The data processing unit 11510 is prepared to effect code execution in a manner described above.

The methods herein described may be performed by the device 11500 by means of the data processing unit 11510 which runs the programme stored in the memory 11560 or the read/write memory 11550. When the device 11500 runs the programme, methods herein described are executed.

## Claims

1. A method for fitting of operating means (260; 860) for acting upon a differential lock of a motor vehicle (100; 110), comprising the steps of:
fitting a configuration (510, 520; 950) which has a first end and a second end so that the first end is supported for sliding in a cylinder (522, 910) and the second end is supported for sliding in a gear housing (470), whereby the configuration is movable between a first extreme position and a second extreme position, and so that a switching device (310) is fastened to the configuration (510, 520; 950) between the first and second ends, which switching device (310) is adapted to acting upon a coupling half (365) in a differential coupling (360) of the differential lock, so that the differential lock is deactivated when the configuration is in the first extreme position and is activated when the configuration is in the second extreme position,
fitting the cylinder, with the configuration capable of sliding therein, in the gear housing (470) and
setting a position of the configuration relative to the gear housing (470) so that a predetermined clearance in the differential coupling (360) is effected when the configuration is in the second extreme position, whereby
the step of setting the position of the configuration (510, 520, 950) relative to the gear housing comprises the steps of:
- first acting upon the differential coupling so that its mutually cooperating teeth assume an undesirable contact pattern in which a torque peak occurs, and thereafter
- with the aid of setting means (530, 531, 930, 940) integrated into the operating means (260, 860), setting the position of the configuration relative to the gear housing so that a predetermined clearance in the differential coupling is effected.

2. A method according to claim 1, further comprising the step of:
- fitting spring means (550) round the configuration (510; 950) between the switching device (310) and the gear housing at which the second end of the configuration is supported, which spring is adapted to exerting a pushing force to urge the configuration towards its first extreme position.

3. A method according to any one of claims 1-2, further comprising the step of:
- fitting a locking mechanism for locking the configuration in the set position relative to the gear housing whereby a predetermined clearance in the differential coupling is effected when the configuration is in the second extreme position.

4. A method according to any one of claims 1-3, further comprising the step of:
- fitting a cover (560) to the gear housing in order to cover the configuration.

5. A method according to any one of claims 1-4, in which the method steps are performed manually.

6. An assembly robot (1150) adapted to performing the method steps according to any one of claims 1-5.

7. A computer programme (P) for fitting of operating means (260, 860) to a motor vehicle (100; 110), which computer programme (P) comprises programme code stored on a computer-readable medium for causing a device (11500) to control a robot (1150) to perform the steps according to any one of claims 1-5.

8. A computer programme product comprising a programme code stored on a computer-readable medium for causing a robot (1150) to fit operating means (260, 860) to a motor vehicle (100; 110) by performing the method steps according to any one of claims 1-5 when said computer programme is run on an electronic device (11500).

## Patentansprüche

1. Verfahren zum Montieren von Betriebsmitteln (260; 860) zum Bedienen einer Differentialsperre eines Kraftfahrzeugs (100; 110), umfassend die Schritte:
Montieren einer Anordnung (510, 520; 950), welche ein erstes Ende und ein zweites Ende aufweist, derart, dass das erste Ende zum Gleiten in einem Zylinder (522, 910) gelagert ist und das zweite Ende zum Gleiten in einem Getriebegehäuse (470) gelagert ist, wobei die Anordnung beweglich zwischen einer ersten Extremposition und einer zweiten Extremposition ist, und derart, dass eine Schaltvorrichtung (310) an der Anordnung (510, 520; 950) zwischen dem ersten und dem zweiten Ende befestigt ist, wobei die Schaltvorrichtung (310) dazu ausgebildet ist, derart auf eine Kupplungshälfte (365) einer Differentialkupplung (360) der Differentialsperre einzuwirken, dass die Differentialsperre deaktiviert wird, wenn sich die Anordnung in der ersten Extremposition befindet, und aktiviert wird, wenn sich die Anordnung in der zweiten Extremposition befindet,
Montieren des Zylinders in das Getriebegehäuse (470), wobei die Anordnung dazu fähig ist, darin zu gleiten, und
Einstellen einer Position der Anordnung bezüglich des Getriebegehäuses (470) derart, dass ein vorgegebenes Spiel in der Differentialkupplung (360) erreicht wird, wenn sich die Anordnung in der zweiten Extremposition befindet,
wobei der Schritt des Einstellens der Position der Anordnung (510, 520, 590) bezüglich des Getriebegehäuses die Schritte umfasst:
- erstes Einwirken auf die Differentialkupplung derart, dass ihre gegeneinander zusammenwirkenden Verzahnungen ein unerwünschtes Kontaktbild annehmen, in welchem eine Drehmomentspitze auftritt, und danach
- mit der Hilfe von Einstellungsmitteln (530, 531, 930, 940), welche in die Betriebsmittel (560, 860) eingebunden sind, Einstellen der Position der Anordnung bezüglich des Getriebegehäuses derart, dass ein vorgegebenes Spiel in der Differentialkupplung erreicht wird.

2. Verfahren nach Anspruch 1, weiter umfassend den Schritt:
- Montieren von Federmitteln (550) um die Anordnung (510; 950) herum zwischen der Schaltvorrichtung (310) und dem Getriebegehäuse, an welchem das zweite Ende der Anordnung gelagert ist, wobei die Feder dazu ausgebildet ist, eine Schubkraft auszuüben, um die Anordnung in Richtung ihrer ersten Extremposition zu drängen.

3. Verfahren nach einem der Ansprüche 1 bis 2, weiter umfassend den Schritt:
- Montieren eines Sperrmechanismus zum Sperren der Anordnung in der eingestellten Position bezüglich des Getriebegehäuses, wobei ein vorgegebenes Spiel in der Differentialkupplung erreicht wird, wenn sich die Anordnung in der zweiten Extremposition befindet.

4. Verfahren nach einem der Ansprüche 1 bis 3, weiter umfassend den Schritt:
- Montieren einer Abdeckung (560) an das Getriebegehäuse, um die Anordnung abzudecken.

5. Verfahren nach einem der Ansprüche 1 bis 4, in welchem die Verfahrensschritte manuell durchgeführt werden.

6. Montageroboter (1150), der zur Durchführung der Verfahrensschritte nach einem der Ansprüche 1 bis 5 ausgebildet ist.

7. Computerprogramm (P) zum Montieren von Betriebsmitteln (260, 860) an ein Kraftfahrzeug (100; 110), wobei das Computerprogramm (P) einen Programmcode umfasst, welcher auf einem computerlesbaren Medium gespeichert ist, um eine Vorrichtung (11500) zu veranlassen, einen Roboter (1150) anzusteuern, um die Schritte nach einem der Ansprüche 1 bis 5 durchzuführen.

8. Computerprogrammprodukt, umfassend einen Programmcode, welcher auf einem computerlesbaren Medium gespeichert ist, um einen Roboter (1150) zu veranlassen, Betriebsmittel (260, 860) an ein Kraftfahrzeug (100; 110) zu montieren, indem er die Verfahrensschritte nach einem der Ansprüche 1 bis 5 durchführt, wenn das Computerprogramm auf einem elektronischen Gerät (11500) ausgeführt wird.

## Revendications

1. Procédé pour l'adaptation de moyens d'actionnement (260 ; 860) pour agir sur un blocage de différentiel d'un véhicule à moteur (100 ; 110), comprenant les étapes consistant à :
adapter une configuration (510, 520 ; 950) qui comporte une première extrémité et une deuxième extrémité de telle sorte que la première extrémité soit supportée de façon à coulisser dans un cylindre (522, 910) et que la deuxième extrémité soit supportée de façon à coulisser dans une boîte d'engrenages (470), grâce à quoi la configuration est mobile entre une première position extrême et une deuxième position extrême, et de telle sorte qu'un dispositif de commutation (310) soit fixé à la configuration (510, 520 ; 950) entre les première et deuxième extrémités, ce dispositif de commutation (310) étant adapté de façon à agir sur une moitié d'accouplement (365) dans un accouplement de différentiel (360) du blocage de différentiel, de telle sorte que le blocage de différentiel soit désactivé lorsque la configuration est dans la première position extrême et soit activé lorsque la configuration dans la deuxième position extrême,
adapter le cylindre, avec la configuration susceptible de coulisser à l'intérieur de celui-ci, dans la boîte d'engrenages (470), et
établir une position de la configuration par rapport à la boîte d'engrenages (470) de telle sorte qu'un espacement prédéterminé dans l'accouplement de différentiel (360) soit réalisé lorsque la configuration est dans la deuxième position extrême, grâce à quoi :
l'étape d'établissement de la position de la configuration (510, 520, 950) par rapport à la boîte d'engrenages comprend les étapes consistant à:
- agir tout d'abord sur l'accouplement de différentiel de telle sorte que ses dents coopérant mutuellement établissent un motif de contact indésirable dans lequel un pic de couple se produit, et après quoi :
- à l'aide de moyens d'établissement (530, 531, 930, 940) intégrés dans les moyens d'actionnement (260, 860), établir la position de la configuration par rapport à la boîte d'engrenages de telle sorte qu'un espacement prédéterminé dans l'accouplement de différentiel soit réalisé.

2. Procédé selon la revendication 1, comprenant de plus l'étape consistant à :
- adapter des moyens formant ressort (550) autour de la configuration (510 ; 950) entre le dispositif de commutation (310) et la boîte d'engrenages au niveau de laquelle la deuxième extrémité de la configuration est supportée, ce ressort étant adapté de façon à exercer une force de poussée de façon à pousser la configuration vers sa première position extrême.

3. Procédé selon l'une quelconque des revendications 1 ou 2, comprenant de plus l'étape consistant à :
- adapter un mécanisme de blocage pour bloquer la configuration dans la position établie par rapport à la boîte d'engrenages, grâce à quoi un espacement prédéterminé dans l'accouplement de différentiel est réalisé lorsque la configuration est dans la deuxième position extrême.

4. Procédé selon l'une quelconque des revendications 1 à 3, comprenant de plus l'étape consistant à :
- adapter un capot (560) sur la boîte d'engrenages, de façon à recouvrir la configuration.

5. Procédé selon l'une quelconque des revendications 1 à 4, dans lequel les étapes du procédé sont effectuées manuellement.

6. Robot d'assemblage (1150), adapté de façon à effectuer les étapes de procédé selon l'une quelconque des revendications 1 à 5.

7. Programme informatique (P) pour l'adaptation de moyens d'actionnement (260, 860) à un véhicule à moteur (100 ; 110), ce programme informatique (P) comprenant un code de programme mémorisé sur un support lisible par un ordinateur pour faire commander un robot (1150) par un dispositif (11500) pour effectuer les étapes selon l'une quelconque des revendications 1 à 5.

8. Produit de programme informatique, comprenant un code de programme mémorisé sur un support lisible par un ordinateur de façon à faire adapter par un robot (1150) des moyens d'actionnement (260, 860) à un véhicule à moteur (100 ; 110) par la réalisation des étapes de procédé selon l'une quelconque des revendications 1 à 5 lorsque ledit programme informatique est exécuté sur un dispositif électronique (11500).
